# EUROPÄISCHE PATENTSCHRIFT

(11) **EP 3 555 994 B1**
(45) Veröffentlichungstag und Bekanntmachung des Hinweises auf die Patenterteilung: **29.05.2024**
(21) Anmeldenummer: 17808387.9
(22) Anmeldetag: 20.11.2017
(51) Int. Cl.: H02K 3/28, H02K 3/34, H02K 3/32, H02K 3/40

(54) **STATOR FÜR EINE ELEKTRISCHE MASCHINE UND VERFAHREN ZUR HERSTELLUNG EINES DERARTIGEN STATORS**
STATOR FOR AN ELETRIC MACHINE AND METHOD OF MANUFACTURING THIS STATOR
STATOR POUR UNE MACHINE ÉLECTRIQUE AINSI QUE PROCÉDÉ DE FABRICATION DE CE STATOR

(30) Priorität: 16.12.2016 DE 102016225240
(43) Veröffentlichungstag der Anmeldung: 23.10.2019
(73) Patentinhaber: Volkswagen Aktiengesellschaft, 38440 Wolfsburg (DE)
(72) Erfinder: EINFELD, Hauke, 34132 Kassel (DE); WINTER, Jan, 34121 Kassel (DE); HELMER, Rainer, 34117 Kassel (DE); BRÜGGEMANN, Marco, 34121 Kassel (DE)
(86) Internationale Anmeldenummer: PCT/EP2017/079747
(87) Internationale Veröffentlichungsnummer: WO 2018/108459

(56) Entgegenhaltungen:
- EP-A2- 1 933 444
- WO-A1-2012/114181
- US-A1- 2014 265 711
- US-A1- 2014 300 236

## Beschreibung

### Stand der Technik

In Gerätestromkreisen moderner Maschinen, wie beispielsweise im Betrieb über getaktete Umrichterquellen angetriebene elektrische Motoren, kommt es vermehrt zu sich wiederholenden, energiereichen Impulsen (z.B. Schaltimpulse). Sie haben kurze Anstiegszeiten und Scheitelspannungen deutlich über dem Nennwert der Versorgungsspannung. Diese Impulse lassen Isolationssysteme auf andere Weise altern als unter herkömmlicher, netzfrequenter Wechselspannung. Dabei müssen folgende Punkte berücksichtigt werden: Teilentladungen zerstören die Isolation durch aggressive Abbauprodukte, UV- Strahlung und Ozon, elektromechanische Ermüdung aufgrund der Stromimpulse und dielektrische Erwärmung wegen der hochfrequenten Anteile der Spannungsimpulse. Selbst wenn die Nennspannung unterhalb der Teilentladung-Einsetzspannung liegt, können überlagerte Impulse Teilentladungen zünden. Dabei beeinflussen die Temperatur, die Luftfeuchtigkeit, die Impulsform, Impulspolarität und Impulswiederholungsrate wesentlich die Degradationsgeschwindigkeit der Werkstoffe. Ein ausreichender Abstand zur Teilentladungs-Verlöschungsspannung ist also immer wichtig. Diese erreicht man - neben konstruktiven Maßnahmen - durch Verwendung ausreichend spannungsfester, sprich "dicker" Isolationen. Das widerspricht allerdings den Anforderungen nach möglichst wenig Isolationsmaterial innerhalb von elektrischen Maschinen. Denn nur die Eisen- und Kupferanteile sind elektrisch wirksam, während andererseits der zur Verfügung stehende Bauraum für die zu konstruierende Maschine vielfach stark beschränkt ist.

Bei der Konstruktion und Herstellung elektrischer Maschinen ist also darauf zu achten, dass die Spannungsdifferenzen benachbarter Leiter in den Nuten möglichst gering sind, da es ansonsten aufgrund der Spannungsbelastung zu Teilentladungen in den Isolationsmaterialien der Leiter oder zwischen den Leitern kommen kann. Diese Teilentladungen können über die Lebensdauer der Maschine das Isolationssystem der Maschine beschädigen oder zerstören, wodurch ein Ausfall/Liegenbleiben entstünde. Zur Verhinderung der Teilentladungen kann der Abstand der benachbarten Leiter zueinander durch das Einbringen eines zusätzlichen Isolationsmaterials vergrößert werden.

Die US 2014/0265711 A1 und die US 2014/0300236 A1 offenbaren Segmentspulen für einen Stator einer elektrischen Maschine, wobei gerade, in einer Nut eines Stators angeordnete Leiterabschnitte mit nur einer ersten isolierenden Überzugsschicht versehen sind, und wobei aus den Nuten herausragende Spulenendabschnitte zusätzlich mit einer zweiten isolierenden Überzugsschicht ausgebildet sind.

Aus der EP 1 933 444 A2 sind elektrische Leiter eines Stators einer elektrischen Maschine bekannt, welche mit einer Isolation aus einem nichtlinearen dielektrischen Material versehen sind, dessen dielektrische Konstante in Bereichen ansteigt, in welchen hohe elektrische Belastungen vorliegen.

Aus der DE 10 2004 013 579 A1 ist es bekannt, im Wickelkopf des Stators die sich kreuzenden Leitungen der verteilten Wicklung durch Papierfolien voneinander zu trennen, soweit sie mit unterschiedlichen Phasen eines 3-Phasen-Stroms beaufschlagt sind. Unter entsprechenden Voraussetzungen ist es allerdings gut möglich, dass die Teilentladung nicht im Wickelkopf sondern zwischen den Leitern innerhalb einer Nut des Stators stattfindet.

Weiterhin ist vorgeschlagen worden, Isolationsmaterial zwischen alle Teilleiter der Nut einzubringen. Nachteilig hierbei ist dabei aber, dass der Kupferfüllfaktor der Statornuten geringer wird. Weiterhin wird mehr Material eingesetzt als tatsächlich benötigt wird. Zusätzlich wird die Prozesszeit zur Erstellung des Stators verlängert.

Eine andere Möglichkeit zur Vermeidung von Teilentladungen kann darin bestehen, ein optimiertes Wickelschema anzuwenden, bei der die Spannungsdifferenzen nicht so groß sind. Hierbei ist allerdings ein aufwändigeres Herstellungsverfahren in Kauf zu nehmen. Schließlich besteht die Möglichkeit, dass die Maschine mit anderen Spannungslagen betrieben wird, was aber vielfach nicht möglich ist, da die Randbedingungen hinsichtlich der Eingangsspannung und der Ausgangsspannung festgelegt sind.

### Darstellung der Erfindung: Aufgabe, Lösung, Vorteile

Die Erfindung geht daher aus von einem Stator entsprechend dem Oberbegriff nach Anspruch 1 beziehungsweise von einem Verfahren entsprechend dem Oberbegriff nach Anspruch 6. Aufgabe der Erfindung ist es, einen Stator bzw. ein Verfahren zur Herstellung eines derartigen Stators anzugeben, wodurch einerseits ein großer Füllfaktor erreichbar ist und sich andererseits Teilentladungen sicher vermeiden lassen.

Diese Aufgabe wird durch die Merkmalskombination nach Anspruch 1 bzw. durch die Merkmale des Verfahrens nach Anspruch 6 gelöst. Anstatt also zwischen allen Leitungen einen gleichartig ausgestalteten Lagentrenner einzufügen, wird dieser Lagentrenner im Prinzip optimiert und an die jeweils bestehenden Anforderungen angepasst. Im Ergebnis wird daher hinsichtlich des Lagentrenners nur so viel Material verwendet, wie dies für eine ökonomische Fertigung sinnvoll ist. Hierdurch wird bei verbesserter Durchschlagsfestigkeit zwischen den Leitern gleichzeitig der Füllfaktor der betreffenden Wicklungen vergrößert. Die Erfindung besteht daher im Prinzip in Folgendem: Das Wickelschema der Maschine wird dahingehend analysiert, an welchen Stellen der Wicklung (zwischen welchen Teilleitern) eine für den Betrieb der Maschine zu große Spannungsdifferenz vorliegt. Nur an diesen Stellen wird dann ein entsprechend dimensionierter Lagentrenner eingesetzt. Dieses zusätzliche Isolationsmaterial (Lagentrenner) wird somit nur an den notwendigen Stellen der Wicklung verwendet, um den Materialeinsatz sowie die Fertigungszeit zu optimieren und den Kupferfüllfaktor der Nut zu erhöhen. Die Erfindung ist daher nicht primär an den Wickelköpfen, sondern in den Nuten des Stators wirksam. Der Lagentrenner kann aus einem im Handel erhältlichen geeigneten Material bestehen, dessen bekannte Isolationswerte bei der Auswahl des Lagentrenners berücksichtigt werden.

Weitere Vorteile bestehen in Folgendem: Die Fertigungszeit wird durch die Anwendung der beschriebenen Maßnahmen verkürzt, weil man nicht pauschal zwischen jedes Leiterpaar einen Lagentrenner legt, sondern nur an den Stellen, wo er benötigt wird. Hierdurch wird Prozesszeit und -risiko verringert.

Die beschriebenen Maßnahmen (Lagentrenner) sind weiterhin vorteilhaft für den Einsatz ohne optimiertes Wickelschema. Durch Mehraufwand in der Wicklung kann man an sich die Spannungsdifferenzen verringern, wodurch dann kein Lagentrenner mehr benötigt würde. Dies ist allerdings an anderer Stelle aufwändig. Die erfindungsgemäßen Maßnahmen sind insbesondere bei der Verwendung getakteter Umrichterquellen vorteilhaft (Spannungsüberschwinger beim Schalten). Derartige Quellen befinden sich zum Beispiel in jedem Fahrzeug mit elektrischem Antrieb (Hybrid/BEV) und sind meistens durch eine B6-Brücke mit Spannungszwischenkreis dargestellt.

Zwar ist es denkbar, den zwischen die Leiter eingefügten zusätzlichen Lagentrenner in die Isolation des Leiters selbst zu integrieren, indem dessen Isolationsschicht örtlich im Bedarfsfalle erhöht wird. Derartige Maßnahmen dürften aber wegen der Herstellungsökonomie schnell an ihre Grenzen stoßen. Für die spezielle Trennfolie empfiehlt es sich, genormte, im Handel erhältliche und in ihrer Durchschlagfestigkeit angepasste Materialien zu verwenden. Ein derartiges Material als Flächenisolierstoff mit erhöhter Beständigkeit gegen Teileinladungen kann beispielsweise aus Papier Nomex 410 der Firma Dupont bestehen.

In der Praxis sind Leiter normalerweise in Lagen aufgewickelt, wobei die Lagen sich im Wesentlichen parallel zur Seitenfläche der Nuten erstrecken. Innerhalb einer Wicklung können daher größere Potenzialunterschiede zwischen Leitern auftreten, die senkrecht zur Lagenebene aneinander angrenzen. Zur Vereinfachung der Fertigung des erfindungsgemäßen Stators empfiehlt sich in der Weiterbildung der Erfindung die Merkmalskombination nach Anspruch 2 anzuwenden. Hierbei wird darauf verzichtet, die Dicke und/oder die Materialbeschaffenheit des Lagentrenners hinsichtlich jeder auftretenden Kombination zweier einander angrenzender Leiter zu beiden Seiten des Lagentrenners anzupassen. Vielmehr wird die Auswahl des Lagentrenners durch das größte (errechnete) Spannungspotenzial zwischen zwei zu beiden Seiten des Lagentrenners jeweils einander zugeordneten Leitern bestimmt. Bleibt dieses größte Potenzial unterhalb einer definierten Spannung, so kann zumindest hinsichtlich dieser betreffenden Lage auf die Einfügung eines Lagentrenners (Folie) verzichtet werden. Die Spannungspotenziale der in der Ebene des Lagentrenners nebeneinander angrenzenden Leiter werden dabei nicht berücksichtigt, da diese Spannungspotenziale zwischen den in der Ebene des Lagentrenners nebeneinander liegenden Leitern vergleichsweise klein sein dürften.

Für den Fall allerdings, dass zwei oder mehrere Teilleiter nebeneinander in der Nut Potenzialdifferenzen zueinander aufweisen, kann man auch gegebenenfalls dazwischen eine Isolationsschicht aufzubringen, z.B. durch Aufkleben vor dem Einbringen in die Nut. Die voneinander zu isolierenden Leiter liegen dann nicht zu beiden Seiten der Ebene des Lagentrenners, sondern in der gleichen Ebene.

Vorteilhaft werden die Lagentrenner an die anliegenden Spannungspotenziale in ihrer Dicke angepasst, um den Materialeinsatz und Platzbedarf in der Nut weiter zu optimieren. Damit wird dann bei großen Spannungsdifferenzen ein dickerer, bei kleineren Spannungsdifferenzen ein dünnerer Lagentrenner eingesetzt. Die Lagentrenner liegen bei der vorliegenden Erfindung nur an den relevanten Stellen. Die Dicke der Lagentrenner kann variiert werden.

Eine weitere Vereinfachung der Herstellung des erfindungsgemäßen Stators ergibt sich aus den Merkmalen nach Anspruch 3. Hierbei wird darauf verzichtet den Lagentrenner in den Bereichen zu entfernen, in denen keine die Teilentladungsspannung überschreitende Potenzialspannungen zwischen den angrenzenden Leitern errechnet werden.

Bei den Wicklungen werden an vielen Stellen üblicherweise dickere Lagentrenner eingesetzt als theoretisch notwendig. Es ist zwar möglich, von den Materialherstellern dünnere Isolationsmaterialien zu beziehen, allerdings kann es zu Problemen bei der Verarbeitung solch dünner Materialien kommen. Viele verschiedene Materialdicken im Fertigungsprozess bergen ein großes Prozessrisiko und erhöhen die Kosten der Fertigungslinie.

Erfindungsgemäß sind zwei in radialer Richtung aneinander angrenzende Lagen in einer Nut durch mindestens zwei in radialer Richtung aneinander angrenzende einzelne Leiter gebildet.

Danach werden die in radialer Richtung aneinander grenzenden Leiter gegebenenfalls durch jeweils einen Lagentrenner getrennt. Nähere Ausführungen hierzu beschreibt das unten aufgeführte Ausführungsbeispiel. Die Isolationsmittel werden hierbei im Bedarfsfälle in tangentialer Richtung zwischen die in radialer Richtung aneinander angrenzenden Leiter eingefügt. Die voneinander durch das Isolationsmaterial zu trennenden Leiter verlaufen gemeinsam in einer parallel zur seitlichen Nutenwand sich erstreckenden Ebene. Eine derartige Merkmalskombination kann insbesondere dann vorteilhaft sein, wenn sie mit den Merkmalen nach Anspruch 5 kombiniert wird. Die Merkmalskombination erlaubt insbesondere die Verwendung sehr Raum sparender schmaler Nuten, so dass über den Umfang des Stators sehr viele Nuten eingefügt werden können.

Da sich die an eine Wicklung angelegte Spannung über die Länge der Leitung verteilt, treten gemäß in der Merkmalskombination nach Anspruch 4 zwischen den Leitern (genauer vielfach als Teilleiter einer Wicklung bezeichnet) Spannungsunterschiede auf, die abhängig von der Form der Eingangsspannung erheblich sein können. Unabhängig von der Art der Wicklung wird der Stator vorzugsweise derart ausgestaltet, dass er für eine elektrische Maschine geeignet ist.

Eine im Zusammenhang mit Anspruch 5 bezeichnete Weiterbildung der Erfindung ist besonders für die in Verbindung mit Anspruch 1 angegebenen Merkmale vorteilhaft. Zur Erzeugung eines verbesserten Drehfeldes werden unterschiedlichen Phasen der Eingangsspannung zugeordnete Leiter in die gleiche Nut als Zweischichtwicklung eingefügt. Die hierdurch auftretenden Spannungen zwischen einander angrenzenden Leitern in einer Nut können dabei stark voneinander abweichen, so dass die Anwendung der vorliegenden Erfindung besonders effizient sein kann.

Die Merkmale nach Anspruch 8 geben in Weiterbildung des Verfahrens nach Anspruch 7 ein Verfahren an, nach dem die Dicke des einzufügenden Isolationsmaterials zwischen zwei aneinander angrenzenden Leitern bestimmt werden kann. Als erstes muss festgelegt werden, welche Teilentladungseinsetzspannung beziehungsweise Teilentladungsspannung erreicht werden soll. Diese Spannung muss abgeschätzt werden und hängt von den Randbedingungen des betrachteten Systems ab. Dazu gehören die Spannung, mit der das System betrieben werden soll, und die zu erwartende Alterung, die Einflüsse der Umgebung, und bei Verwendung eines Umrichters dessen Taktung und Frequenz. Hat man die Teilentladungseinsetzspannung (z. B. 516 V) festgelegt, so lässt sich aufgrund der Angaben der Hersteller zu dem zur Verfügung stehenden Isolationsmaterial die notwendige gesamte Sollschichtdicke bestimmen. Ist die zuletzt genannte Größe bestimmt (z.B. 250 Mikrometer), so kann man nunmehr aufgrund des errechneten Potenzials zwischen zwei aneinander angrenzenden Leitern bestimmen, inwieweit die Sollschichtdicke an der jeweiligen Stelle vergrößert oder vermindert werden muss. Von der somit bestimmten örtlich notwendigen Dicke des Isolationsmaterials wird die Dicke der Isolation an den beiden Leitern abgezogen, da Isolation in ihrem Isolationskoeffizienten in etwa dem Isolationskoeffizienten des zusätzlich einzufügenden Materials entspricht.

Ist die Teilentladungseinsetzspannung und die notwendige gesamte Sollschichtdicke festgelegt, so lässt sich in der oben beschriebenen Weise auch die Teilentladungsspannung für zwei aneinander grenzende Leiter bestimmen, zwischen denen kein zusätzliches Isoliermaterial eingefügt ist. Hierzu wird die Dicke der beiden Isolierschichten der aneinander angrenzenden Drähte zu der gesamten Sollschichtdicke ins Verhältnis gesetzt und mit der festgelegten Teilentladungseinsetzspannung multipliziert.

### Kurze Beschreibung der Zeichnungen

Ein Ausführungsbeispiel der Erfindung wird nachfolgend an Hand der Zeichnung beschrieben. In der Zeichnung zeigen:
- Figur 1: einen Ausschnitt aus einer Tabelle, in der die für die einzelnen Teilleiter (vereinfacht vielfach als Leiter bezeichnet) in der jeweiligen Nut berechneten Potenziale angegeben sind,
- Figur 2: einen Ausschnitt aus einer Tabelle, in der jeweils nun die Potenzialdifferenzen zwischen zwei Leitern in der jeweiligen Nut gemäß Figur 1 angegeben sind,
- Figur 3: einen Ausschnitt aus einer Tabelle, in der die theoretisch notwendigen Isolierschichtdicken für die in Figur 2 angegebenen Potenzialdifferenzen gezeigt sind,
- Figur 4: einen Ausschnitt aus einer Tabelle, in der die praktisch einzusetzenden Isolierschichtdicken entsprechend den Ergebnissen in Figur 3 festgehalten sind und
- Figur 5: einen Ausschnitt aus einer Tabelle, in der ein Vorschlag gemacht wird, welche im Handel erhältlichen Isolierungsmaterialien an welchen Stellen tatsächlich aufgrund der Ergebnisse in Figur 4 eingesetzt werden könnten.

### Bevorzugte Ausführungsform der Erfindung

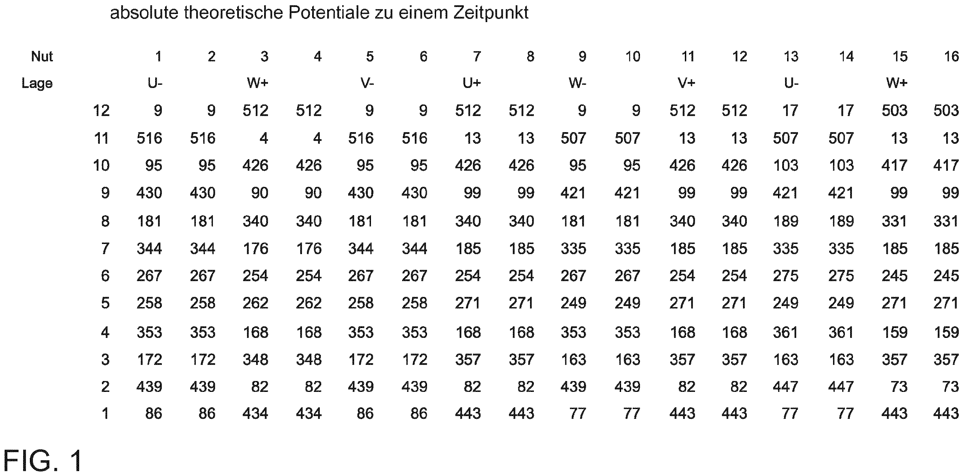

Figur 1 zeigt einen Ausschnitt aus einer Tabelle, in der die rechnerisch ermittelten absoluten Werte der Potenziale an den Leitern in den einzelnen Nuten zu einem bestimmten Zeitpunkt eingetragen sind. Das Verfahren der Berechnung wird an dieser Stelle nicht näher erläutert. Unter der Bezeichnung "Leiter" sind in der vorliegenden Anmeldung jeweils die Abschnitte einer Wicklung gemeint, die sich innerhalb einer Nut längst dieser erstrecken. Man könnte anstelle von "Leiter" also auch "Teilleiter" sagen.

Figur 1 bezieht sich auf einen Stator einer Drehstrom-Maschine, für die sehr viele (zum Beispiel 120) Nuten vorgesehen sind, in denen die mit den Phrasen U, V, W eines Drehstroms beaufschlagten Leiter eingefügt sind. Die vorliegende Erfindung ist auf alle Wicklungsarten anwendbar, da die angelegte Spannung über die gesamte Leitung abfällt, so dass an den einzelnen Teilleitern unterschiedliche Potenziale herrschen.

Die Berechnungen gelten für alle Nuten des Stators. Im vorliegenden Beispiel hat der Stator 120 Nuten, er kann aber auch mehr oder weniger Nuten aufweisen. Es handelt sich somit nicht um eine konzentrierte Wicklung ("Einzelzahnwicklung"), sondern um eine verteilte Wicklung. Prinzipiell kann man das Verfahren aber auch für konzentrierte Wicklungen anwenden.

Die Wicklung des Stators gemäß Figur 1, welcher für einen Drehstroms-Synchronmotor vorgesehen ist, weist eine Besonderheit auf. In jeder der Nuten sind 12 Leiter in radialer Richtung und in einer Ebene parallel zu der Seitenwand der Nut übereinander aufgeschichtet. Somit liegen innerhalb einer Nut nur eine bestimmte Anzahl von Leitern übereinander, nicht nebeneinander. Die Spannung zwischen den einzelnen Leitern wirkt also in radialer Richtung, so dass die Isolationsmittel quer zu dieser Richtung tangential zwischen die Leiter einzulegen sind. Man kann in dem vorliegenden Falle also nur bedingt von einer Lage sprechen, da jede Lage nur aus einem einzigen Leiter besteht und diese hypothetischen Lagen sich zudem noch in einer tangentialen Ebene erstrecken. Somit herrscht an dem in radialer Richtung untersten Leiter der Nut 1 in der "Lage1" beispielsweise ein Potenzial von 86 V, an dem Leiter in der "Lage 11" ein Potenzial von 516 V und dem Leiter in der "Lage 12" ein Potenzial von 9V. Entsprechende Werte sind aus der Tabelle für die weiteren Nuten 2 bis 16 ersichtlich.

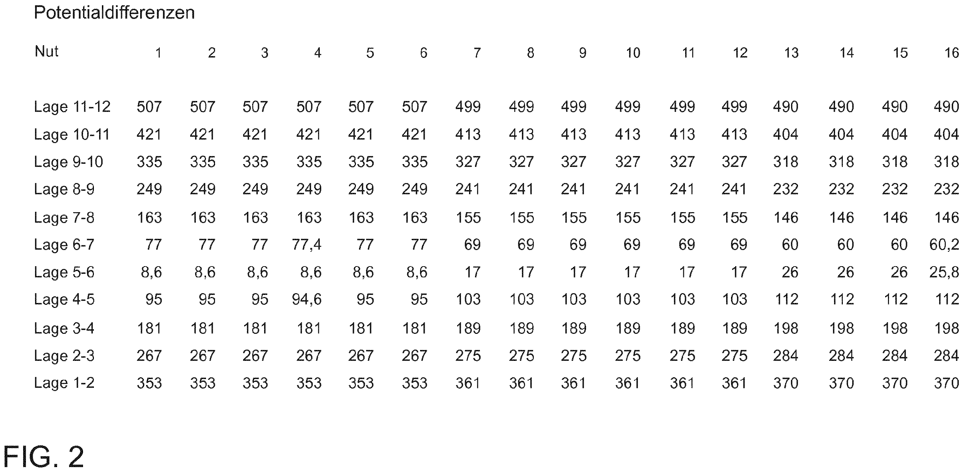

Für eine mögliche Teilentladung zwischen zwei (in radialer Richtung) einander angrenzenden Leitern ist aber nun nicht das absolute Potenzial an den einzelnen Leitern, sondern die Potenzialdifferenz zwischen diesen Leitern wesentlich. Diese Potenzialdifferenzen als Differenz der einzelnen an den benachbarten Leitern herrschenden Potenziale ist in Figur 2 vermerkt, die sich auf Figur 1 bezieht und zu dieser analog aufgebaut ist. Wenn also in Nut 1 der Leiter 12 ein Potenzial von 9 V besitzt und der Leiter 11 ein Potenzial von 516 V, so herrscht zwischen diesen eine Potenzialdifferenzen von 507 Volt. Ein entsprechender Wert ist in Figur 2 für den Zwischenraum Lage 11-12 eingetragen. Die restlichen Werte sind hinsichtlich der Nuten 1 bis 16 und der Lagenzwischenräume Lage 1 - 2 bis Lage 11 - 12 in der Figur 2 eingetragen. Da allein schon durch die Isolationsschichten zweier aneinander angrenzender Leiter zur Vermeidung einer Teilentladung bei einer Potenzialdifferenz von 248 V ausreichen, müssen nur Potenzialdifferenzen aus Figur 2 hinsichtlich zusätzlicher Isolationsmittel berücksichtigt werden, die größer als 248 V sind.

Die Soll-Schichtdicke bestimmt sich aus einer theoretischen Betrachtung, welche Teilentladungseinsetzspannung (TE) man erreichen möchte. Dieser Wert ergibt sich aus den Randbedingungen des Systems (Spannungslage, Alterung, Umgebung, Umrichtertaktung, etc.). Wird das Isolationssystem mit geringer Spannung belastet (bei aufeinander liegenden Leiter mit geringeren Potentialdifferenzen), führt weniger Isolationsmaterial zum gleichen Ergebnis. Das bedeutet, um die Teilentladungsspannung bei maximaler Spannung einzuhalten, braucht man in diesem Beispiel 250µm Schichtdicke (Drahtlack + Lagentrenner). Je nach Potentialdifferenz braucht man dann mehr oder weniger Lagentrennerdicke, in manchen Fällen reicht die Lackschichtdicke (Lagentrennerdicke < 0).

In dem vorliegenden Ausführungsbeispiel wird nun davon ausgegangen, dass die Soll-Isolierschichtdicke insgesamt zwischen spannungsführenden Leitern (inklusive Lacke) 250 µm (Mikrometer) betragen soll. Die im vorliegenden Fall angenommene Sollschichtdicke (Drahtlack + Lagentrenner) von 250 µm reicht vereinbarungsgemäß sicher aus, um eine Teilentladung bis zu einer Potenzialdifferenz von 248 V zuverlässig zu verhindern. Liegt also eine betrachtete Potenzialdifferenz unter 248 V, so ist das Einfügen eines zusätzlichen Isolationsmittels beziehungsweise einer entsprechenden Folie nicht notwendig.

Die Spannung zwischen zwei Leitern, ab der ein Lagentrenner eingesetzt wird, lässt sich beispielsweise berechnen aus dem Verhältnis der Lackschichtdicke zur Gesamtschichtdicke, multipliziert mit der maximalen Spannung, also zum Beispiel 2×60µm /250 µm × 516 V ~ 248 V.

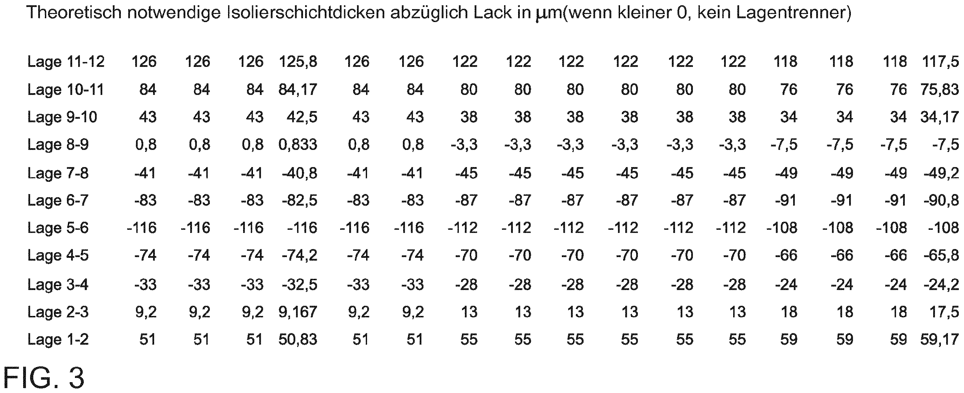

In Figur 3 ist nun berechnet, bei welchen sich aus Figur 2 ergebenden Potenzialdifferenzen zusätzliche Isolationsmittel beziehungsweise eine entsprechende Folie eingefügt werden muss. Ausgangspunkt ist beispielsweise die Annahme, dass unter den gegebenen Randbedingungen für eine maximale Spannung (beispielsweise 516 V) insgesamt eine Isolationsschicht von 250 µm vorgesehen werden muss. Von dieser Isolationsschicht können beispielsweise 2x60 µm abgezogen werden, da dieser Anteil schon in den Isolationsschichten der beiden aneinander angrenzenden Leiter vorhanden ist. Für das Beispiel ergibt sich somit für die Lage 11-12 der Nut 1 hinsichtlich der theoretisch notwendigen Isolierschichtdicke ein Wert von 507V/516Vx250 µm - 2×60 µm ~ 126 µm. Die weiteren Werte in der Tabelle nach Figur 3 sind analog berechnet.

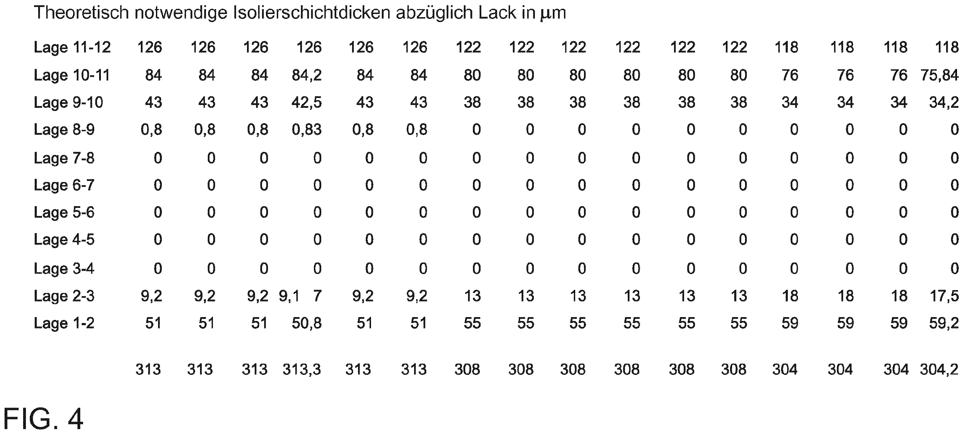

In Figur 4 sind nun die sich aus Figur 3 ergebenden Rechenergebnisse hinsichtlich der Anwendung oder Vermeidung zusätzlicher Isolationsmittel ausgewertet. Sind die nach dem weiter oben im Zusammenhang mit Figur 3 beschriebenen Verfahren berechneten Werte positiv, so muss dort eine Isolationsfolie mit mindestens der errechneten Stärke eingefügt werden, während bei negativen berechneten Werten allein schon die Isolationsschichten der beiden zugehörigen Leiter zur Vermeidung einer Teilentladung ausreichen. Dementsprechend ist für die genannten negativen Werte formal eine zusätzliche Isolationsschicht mit der Stärke 0 µm vermerkt.

Bei allen Werten unter 0 reicht somit die Lackschichtdicke aus, um die benötigte Teilentladungseinsetzspannung zu erreichen. Aus diesem Grund braucht man keine zusätzliche Isolation durch einen Lagentrenner. Alle Werte >0 werden auf die nächstmögliche Materialschichtdicke (das Isolationsmaterial wird nur in bestimmten Schichtdicken gefertigt) aufgerundet, damit wird sichergestellt, dass mindestens die theoretisch benötigte Schichtdicke erreicht wird. Weiterhin sind unterhalb der den Nuten zugeordneten Spalten der Tabelle in Figur 4 die Summen der Stärken aller in der jeweiligen Nut verwendeten Isolationsfolien eingetragen.

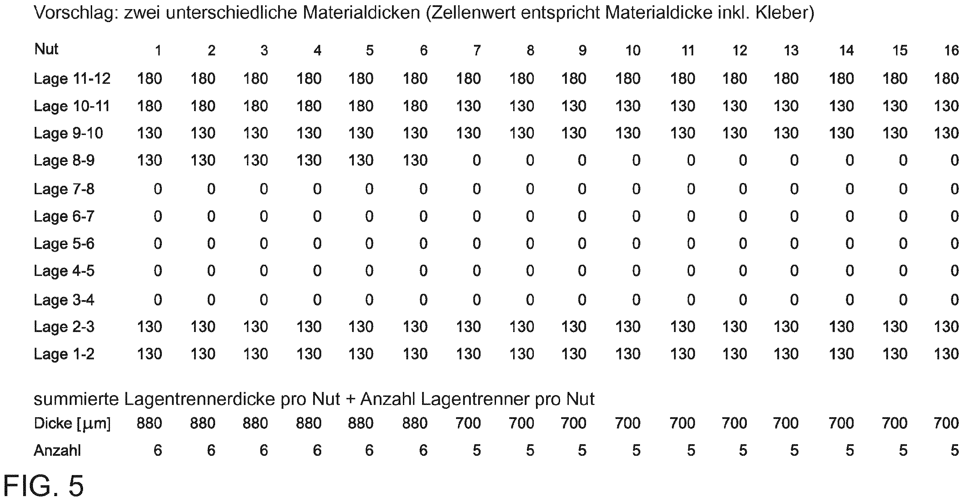

Die Werte in Figur 5 gehen davon aus, dass zwei genormte Isolationsfolien mit den Trägerstärken 80 µm und 130 µm im Handel erhältlich sind und dass die Stärke des Klebers 50 µm beträgt, wobei allerdings zur Sicherheit der Kleber zwar hinsichtlich der Ausdehnung und des Abstandes nicht aber hinsichtlich der Isolationswirkung berücksichtigt wird. Es wird daher eine Folie verwendet, die in ihrer Stärke nicht kleiner ist als die im Zusammenhang mit Figur 4 berechnete Isolierschichtdicke. Praktisch bedeutet das, dass für alle gemäß Figur 4 errechneten Isolierschichtdicken über 80 µm und unter 130 µm eine Folie verwendet wird, welche 130 µm stark ist und bei unterhalb von 80 µm liegenden Isolierschichtdicken eine Folie verwendet wird, welche 80 µm stark ist. Hinsichtlich der tatsächlichen Stärke dieser Folien ist jeweils noch die Stärke des Klebers hinzuzurechnen. Auf diese Weise kommen die in Figur 5 angegebenen Materialstärken von 180 µm beziehungsweise 130 µm zu Stande.

Es werden aus Gründen der Herstellungsökonomie in nur zwei Folienstärken verwendet. Soweit im Handel erhältlich und im Herstellungsprozess vernünftig handhabbar, können natürlich die einzulegenden Folien hinsichtlich der Lagen 9-10 und Lagen 8-9 an die verminderten errechneten Stärken angepasst werden.

In Figur 5 ist zusätzlich noch unterhalb der den einzelnen Nuten zugeordneten Spalten die Summe der Material-Schichtdicken und die Anzahl der einzufügenden Lagentrenner aufgeführt.

Als verwendete Materialien werden beispielhaft die im Handel erhältliche Folie Nomex 410 und Acrylatkleber angegeben.

## Patentansprüche

1. Stator für eine elektrische Maschine mit Nuten zur Aufnahme der Erzeugung eines Magnetfeldes dienenden Leitern, wobei in den Nuten mindestens zwei zueinander parallel verlaufende, aneinander angrenzende Leiter vorgesehen sind, welche durch Isolationsmittel elektrisch voneinander isoliert sind, wobei zwei in radialer Richtung aneinander angrenzenden Lagen in einer Nut durch mindestens zwei in radialer Richtung aneinander angrenzende einzelne Leiter gebildet sind, **dadurch gekennzeichnet, dass** die Isolationsmittel teilweise durch einen zwischen die Leiter eingefügten zusätzlichen Lagentrenner gebildet sind, dass anstatt, dass zwischen allen Leitern ein gleichartiger Lagentrenner eingesetzt ist, die Anwendung und/oder Beschaffenheit der Lagentrenner von dem jeweiligen maximalen Spannungspotenzial zwischen den zueinander parallel verlaufenden, aneinander angrenzenden Leitern in den Nuten abhängig ist, dass die Lagentrenner aus einer Trennfolie bestehen und immer dann eingefügt sind, wenn das maximale Spannungspotential zwischen den aneinander angrenzenden Leitern einen bestimmten Wert überschreitet, und dass die Lagentrenner in einer tangentialen Richtung zwischen den in der radialen Richtung aneinander angrenzenden Leiter angeordnet sind.

2. Stator nach Anspruch 1, **dadurch gekennzeichnet, dass** eine Anzahl von einander angrenzenden Leitern in einer Nut in mindestens zwei übereinander angeordneten Lagen angeordnet sind und dass sich die Anwendung und/oder die Beschaffenheit der Lagentrenner durch die größte maximale Potenzialdifferenz zweier aneinander angrenzender Leiter bestimmt ist.

3. Stator nach Anspruch 2, **dadurch gekennzeichnet, dass** die gegebenenfalls zwischen die Lagen eingefügte Trennfolie sich mindestens über die beiden Lagen erstreckt.

4. Stator nach einem der Ansprüche 1 bis 3, **dadurch gekennzeichnet, dass** der Stator mit konzentrierten Wicklungen versehen ist.

5. Stator nach einem der Ansprüche 1 bis 3, **dadurch gekennzeichnet, dass** der Stator mit verteilten Wicklungen versehen ist.

6. Verfahren zur Bestimmung der Anwendung und/oder Beschaffenheit des Lagentrenners für einen Stator gemäß Anspruch 1, **dadurch gekennzeichnet, dass** die Potenzialdifferenzen zwischen einander angrenzenden Leitern bestimmt werden, dass die zum Beispiel von der Alterung, der Umgebung, der Leiterisolation, der Leiterform oder dem Spannungsverlauf abhängige bestehende theoretische Teilentladungsspannung bestimmt wird, dass bei oberhalb der theoretischen Teilentladungsspannung liegender rechnerischer Potenzialdifferenz der Lagentrenner eingesetzt wird und bei unterhalb der theoretischen Teilentladungsspannung liegender rechnerischer Potenzialdifferenz kein Lagentrenner eingesetzt wird.

7. Verfahren nach Anspruch 6, **dadurch gekennzeichnet, dass** bei die theoretische Teilentladungsspannung übersteigenden rechnerischen Potenzialdifferenzen die Wahl eines geeigneten Lagentrenners von der Höhe der Differenz zwischen den rechnerischen Potenzialdifferenzen und der theoretischen Teilentladungsspannung abhängt.

8. Verfahren nach Anspruch 6 oder 7, **dadurch gekennzeichnet, dass** nach Festlegung einer Teilentladungseinsetzspannung die notwendige Sollschichtdicke des Isolationsmaterials zwischen den einander angrenzenden Leitern bestimmt wird, wobei die Dicke der Isolationsschichten der einander angrenzenden Leiter der Sollschichtdicke zugerechnet wird, dass aus dem Verhältnis der Potenzialdifferenz zweier aneinander angrenzender Leiter und der Teilentladungseinsetzspannung die jeweils notwendige örtliche Isolationsschichtdicke berechnet wird und dass zur Bestimmung der Dicke des zusätzlich einzufügenden Isolationsmaterials von der errechneten Isolationsschichtdicke die Dicke des Isolationsmaterials der beiden aneinander angrenzenden Leiter abgezogen wird.

## Claims

1. Stator for an electric machine having slots for receiving the conductors that are used to generate a magnetic field, wherein at least two conductors that run parallel to one another, adjoin one another and are electrically insulated from one another by insulation means are provided in the slots, wherein two layers that adjoin one another in the radial direction are formed in a slot by at least two individual conductors that adjoin one another in the radial direction, **characterized in that** the insulation means are formed partly by an additional layer separator that is introduced between the conductors, **in that**, instead of an identical layer separator being inserted between all of the conductors, the use and/or characteristics of the layer separators are dependent on the respective maximum voltage potential between the conductors, which run parallel to one another and adjoin one another, in the slots, **in that** the layer separators consist of a separating film and are introduced whenever the maximum voltage potential between the conductors that adjoin one another exceeds a particular value, and **in that** the layer separators are arranged in a tangential direction between the conductors that adjoin one another in the radial direction.

2. Stator according to Claim 1, **characterized in that** a number of conductors that adjoin one another in a slot are arranged in at least two layers that are arranged one above the other, and **in that** the use and/or the characteristics of the layer separators are determined by the greatest maximum potential difference between two conductors that adjoin one another.

3. Stator according to Claim 2, **characterized in that** the separating film that is possibly introduced between the layers extends at least over the two layers.

4. Stator according to one of Claims 1 to 3, **characterized in that** the stator is provided with concentrated windings.

5. Stator according to one of Claims 1 to 3, **characterized in that** the stator is provided with distributed windings.

6. Method for determining the use and/or characteristics of the layer separator for a stator according to Claim 1, **characterized in that** the potential differences between conductors that adjoin one another are determined, **in that** the existing theoretical partial discharge voltage, which is dependent on the aging, the surrounding area, the conductor insulation, the conductor shape or the voltage profile, for example, is determined, **in that** the layer separator is inserted if the computational potential difference is above the theoretical partial discharge voltage and a layer separator is not inserted if the computational potential difference is below the theoretical partial discharge voltage.

7. Method according to Claim 6, **characterized in that**, if the computational potential differences exceed the theoretical partial discharge voltage, the choice of a suitable layer separator is dependent on the magnitude of the difference between the computational potential differences and the theoretical partial discharge voltage.

8. Method according to Claim 6 or 7, **characterized in that** the required target layer thickness of the insulation material between the conductors that adjoin one another is determined after a partial discharge inception voltage has been established, wherein the thickness of the insulation layers of the conductors that adjoin one another is equated to the target layer thickness, **in that** the local insulation layer thickness required in each case is calculated from the ratio of the potential difference between two conductors that adjoin one another and the partial discharge inception voltage, and **in that** the thickness of the insulation material of the two conductors that adjoin one another is subtracted from the calculated insulation layer thickness in order to determine the thickness of the insulation material that is to be additionally introduced.

## Revendications

1. Stator destiné à une machine électrique, ledit stator comprenant des rainures destinées à recevoir des conducteurs servant à générer un champ magnétique, au moins deux conducteurs adjacents qui s'étendent parallèlement l'un à l'autre étant prévus dans les rainures et étant électriquement isolés l'un de l'autre par des moyens d'isolation, deux couches adjacentes l'une à l'autre dans la direction radiale étant formées dans une rainure par au moins deux conducteurs individuels adjacents l'un à l'autre dans la direction radiale,
**caractérisé en ce que** les moyens d'isolation sont partiellement formés par un séparateur de couches supplémentaire inséré entre les conducteurs, et **en ce que**, au lieu d'insérer un séparateur de couches similaire entre tous les conducteurs, l'application et/ou la nature des séparateurs de couches dépend du potentiel de tension maximal respectif entre les conducteurs, adjacents les uns aux autres et s'étendant parallèlement entre eux, dans les rainures, **en ce que** les séparateurs de couches comprennent un film de séparation et ne sont toujours insérés que lorsque le potentiel de tension maximal entre les conducteurs adjacents dépasse une valeur déterminée, et **en ce que** les séparateurs de couches sont disposés dans une direction tangentielle entre les conducteurs adjacents les uns aux autres dans la direction radiale.

2. Stator selon la revendication 1, **caractérisé en ce qu'**un certain nombre de conducteurs adjacents sont disposés dans une rainure sur au moins deux couches disposées l'une au-dessus de l'autre et **en ce que** l'application et/ou la nature des séparateurs de couches est déterminée par la plus grande différence de potentiel maximale entre deux conducteurs adjacents.

3. Stator selon la revendication 2, **caractérisé en ce que** le film de séparation éventuellement inséré entre les couches s'étend au moins sur les deux couches.

4. Stator selon l'une des revendications 1 à 3, **caractérisé en ce que** le stator est pourvu d'enroulements concentrés.

5. Stator selon l'une des revendications 1 à 3, **caractérisé en ce que** le stator est pourvu d'enroulements répartis.

6. Procédé de détermination de l'application et/ou de la nature du séparateur de couches pour un stator selon la revendication 1, **caractérisé en ce que** les différences de potentiel sont déterminées entre des conducteurs adjacents, **en ce que** la tension de décharge partielle théorique existante, qui dépend par exemple du vieillissement, de l'environnement, de l'isolation des conducteurs, de la forme des conducteurs ou de la courbe de tension, est déterminée, **en ce que** le séparateur de couches est inséré si la différence de potentiel calculée est supérieure à la tension de décharge partielle théorique et qu'aucun séparateur de couches n'est inséré si la différence de potentiel calculée est inférieure à la tension théorique de décharge partielle.

7. Procédé selon la revendication 6, **caractérisé en ce que**, lorsque les différences de potentiel calculées dépassent la tension théorique de décharge partielle, le choix d'un séparateur de couches approprié dépend de l'ampleur de la différence entre les différences de potentiel calculées et la tension théorique de décharge partielle.

8. Procédé selon la revendication 6 ou 7, **caractérisé en ce que**, après la détermination d'une tension d'apparition de décharge partielle, l'épaisseur de couche cible nécessaire de la couche du matériau d'isolation entre les conducteurs adjacents est déterminée, l'épaisseur des couches d'isolation des conducteurs adjacents étant ajoutée à l'épaisseur de couche cible, **en ce que** l'épaisseur de couche d'isolation locale nécessaire est calculée à partir du rapport entre la différence de potentiel entre deux conducteurs adjacents et la tension d'apparition de décharge partielle, et **en ce que**, pour déterminer l'épaisseur du matériau d'isolation supplémentaire à insérer, l'épaisseur du matériau d'isolation des deux conducteurs adjacents est retirée de l'épaisseur de couche d'isolation calculée.
